# EUROPÄISCHE PATENTSCHRIFT

(11) **EP 2 244 348 B1**
(45) Veröffentlichungstag und Bekanntmachung des Hinweises auf die Patenterteilung: **19.12.2018**
(21) Anmeldenummer: 10004050.0
(22) Anmeldetag: 16.04.2010
(51) Int. Cl.: H02J 3/38, F03D 9/00, F03D 7/02, F03D 7/04

(54) **Windpark mit mehreren Windenergieanlagen sowie Verfahren zur Regelung der Einspeisung von einem Windpark**
Wind farm with multiple wind energy assemblies and method for regulating the feed-in from a wind farm
Parc éolien doté de plusieurs éoliennes et procédé de réglage de l'alimentation d'un parc éolien

(30) Priorität: 17.04.2009 DE 102009017939
(43) Veröffentlichungstag der Anmeldung: 27.10.2010
(73) Patentinhaber: Nordex Energy GmbH, 22848 Norderstedt (DE)
(72) Erfinder: Fischle, Kurt, 20253 Hamburg (DE); Harms, Ulrich, 22399 Hamburg (DE); Jurkat, Mark, 22844 Norderstedt (DE); Richter, Kay, 22846 Norderstedt (DE)
(74) Vertreter: Hauck Patentanwaltspartnerschaft mbB

(56) Entgegenhaltungen:
- DE-A1-102007 044 601
- US-A1- 2008 073 912
- JOSÉ LUIS RODRÍGUEZ-AMENEDORODRIGUEZ-AMENEDO ET AL: "Automatic Generation Control of a Wind Farm With Variable Speed Wind Turbines", IEEE TRANSACTIONS ON ENERGY CONVERSION, IEEE SERVICE CENTER, PISCATAWAY, NJ, US, Bd. 17, Nr. 2, 1. Juni 2002 (2002-06-01), XP011072090, ISSN: 0885-8969

## Beschreibung

Die vorliegende Erfindung betrifft einen Windpark mit mehreren Windenergieanlagen sowie ein Verfahren zur Regelung einer von einem Windpark mit mehreren Energieanlagen in ein elektrisches Versorgungsnetz eingespeisten elektrischen Größe.

Von den Betreibern elektrischer Versorgungsnetze wird zunehmend die Anforderung gestellt, dass Windparks aktiv zur Regelung der Netzspannung beitragen sollen. Dabei werden auch Anforderungen an die Schnelligkeit der Regelung gestellt, die insbesondere bei Windparks mit räumlich weit auseinander liegend aufgestellten Windenergieanlagen zusätzliche Vorkehrungen für die Schnelligkeit der Regelung erforderlich machen.

Aus DE 10 2004 0 60 943 A1 ist eine Windparkleistungsregelung bekannt, bei der ein Parkmaster zur Steuerung der Windenergieanlagen vorgesehen ist. Der Parkmaster weist einen Leistungsregler auf, der mehrkreisig ausgebildet ist, wobei einer der Kreise zur Leistungsregelung als ein schneller Regelkreis ausgebildet ist, der die Leistungsabgabe für eine erste Gruppe der Windenergieanlagen vorgibt. Ein zweiter Kreis, der auf eine zweite Gruppe der Windenergieanlagen wirkt, ist als langsamer Regelkreis ausgebildet. Die Aufteilung der Windenergieanlagen in zwei Gruppen bewirkt, dass eine erste Gruppe schnell auf Sollwertänderungen und - störungen reagieren kann, während die stationäre Genauigkeit über die langsam geregelte zweite Gruppe von Windenergieanlagen erzielt wird.

Aus einem Artikel "A novel centralised wind farm controller utilising voltage control capability of wind turbines" von Jens Fortmann et al., der zur 16th Power Systems Computation Conference im Juli 2008 in Glasgow veröffentlicht wurde, ist eine Kaskadenregelung von Windenergieanlagen in einem Windpark bekannt. Dabei wird eine schnelle, kontinuierliche Spannungsregelung auf dem Niveau der Windenergieanlagen mit einer relativ langsamen Sollwertsteuerung auf Windparkebene verbunden. Auf Windparkebene werden Spannungssollwerte für die Steuerung der Windenergieanlage gesetzt. In der Windenergieanlage wird der Spannungssollwert für die Windenergieanlage mit dem gemessenen Istwert verglichen und die Differenz als Reglerdifferenz einem Spannungsregler zugeführt. Der Regler auf Windparkebene ist dabei als langsamer Regler ausgebildet, um ungewünschte Stelleingriffe zu vermeiden. Bei diesem Regelungsansatz für den Windpark gibt der auf Parkebene angeordnete Regler seine Stellgröße als Eingangsgröße an einen Spannungsregler in der Windenergieanlage.

Aus EP 1 512 869 A1 ist eine Spannungsregelung für einen Windpark bekannt, bei der ein Spannungsregler auf Parkniveau einen Sollwert für eine zu stellende Blindleistung ermittelt, der an einer Anlagensteuerung der einzelnen Windenergieanlagen anliegt. Die Anlage regelt die von ihr erzeugte Blindleistung auf diesen vorgegebenen Sollwert. Der Regler auf Anlagenniveau ist als schneller Regler ausgebildet, während der Regler auf Parkniveau als langsamer Regler ausgebildet ist. Auch hierbei ist ein kaskadierter Aufbau der Regler gewählt, da der langsame Regler auf Parkebene seine Stellgröße als Sollwert an den schnellen Regler auf Anlagenniveau anlegt.

Wie allgemein aus der Regelungstechnik bekannt, besitzt die Verwendung einer kaskadierten Reglerstruktur eine geringe Flexibilität bei der Auslegung der Regler.

Aus WO 01/73518 ist der Betrieb eines Windparks bekannt, der aus mehreren Windenergieanlagen besteht, von dem ein Teil für eine feste Drehzahl und ein weiterer Teil für eine variable Drehzahl ausgelegt ist. Durch eine Vorgabe der Sollwerte für die Wirkleistung und die Blindleistung der Windenergieanlagen mit variabler Drehzahl soll erreicht werden, dass mehr Windenergieanlagen mit konstanter Drehzahl in den Park aufgenommen werden können, ohne dass es zu unerwünschten Schwankungen in der Spannung oder Leistung des Windparks kommt. Hierzu wird eine Flickersteuereinrichtung vorgeschlagen, die auf Schwankungen in einem definierten Frequenzintervall um 8,8 Hz ansprechend ein Flickerkorrektursignal erzeugt, das von den Windenergieanlagen mit variabler Drehzahl in dem Windpark verarbeitet wird, um die Sollwerte für Wirk- und Blindleistung entsprechend anzupassen.

Aus DE 10 2004 048 341 A1 ist ein Windpark mit robuster Blindleistungsregelung und ein Verfahren zum Betrieb des Windparks bekannt. Der Windpark besitzt einen Parkmaster, der zur Blindleistungsregelung ausgebildet ist und Kommunikationsleitungen zur Übermittlung von Steuersignalen an die Windenergieanlagen des Windparks aufweist. Die Blindleistungsregelung ist als verteilter Regler ausgeführt, der einen zentralen Oberregler am Parkmaster sowie lokale Unterregler an der Windenergieanlage umfasst.

Aus DE 10 2007 044 601 A1 ist ein Windpark mit Spannungsregelung der Windenergieanlagen bekannt. Bei dem bekannten Windpark ist ein Parkmaster zur Wirk- und Blindleistungskontrolle ausgebildet, der Steuersignale für die Blindleistung über ein Kommunikationsnetzwerk an die einzelnen Windenergieanlagen sendet. Die Windenergieanlagen besitzen einen Blindleistungsregler sowie einen Zusatzregler, wobei diese ein Steuersignal für den Umrichter der Windenergieanlage erzeugen.

Der Erfindung liegt die Aufgabe zu Grunde, einen Windpark sowie ein Verfahren zur Steuerung eines Windparks bereitzustellen, das mit einfachen Mitteln eine schnelle Regelung durch die einzelnen Windenergieanlagen erlaubt, aber gleichzeitig eine ausreichend hohe Flexibilität bei der Auslegung der Regler und einen schnellen Reglereingriff auch bei weit auseinander liegenden Windenergieanlagen zulässt.

Erfindungsgemäß wird die Aufgabe durch einen Windpark mit den Merkmalen aus Anspruch 1 gelöst. Ebenfalls wird diese Aufgabe durch ein Verfahren zur Regelung einer von einem Windpark in ein elektrisches Versorgungsnetz eingespeisten elektrischen Größe gemäß Anspruch 10 gelöst. Vorteilhafte Ausgestaltungen bilden den Gegenstand der Unteransprüche.

Der erfindungsgemäße Windpark kann mehrere Windenergieanlagen aufweisen, die die jeweils erzeugte elektrische Leistung zunächst in ein Parknetz einspeisen. Hierbei wird das elektrische Netz, das innerhalb des Windparks von den einzelnen Windenergieanlagen zu einem Verbindungspunkt führt, als Parknetz bezeichnet, während das elektrische Netz jenseits des Verbindungspunktes als elektrisches Versorgungsnetz definiert wird. Der Windpark besitzt erfindungsgemäß ein zentrales Steuersystem, das gelegentlich auch als Parkmaster bezeichnet wird. Das zentrale Steuersystem ermittelt abhängig von einem Istwert einer elektrischen Größe vor oder nach dem Verbindungspunkt über einen ersten Regler einen Korrekturwert für einen lokalen Sollwert einer oder mehrerer Windenergieanlagen. Das zentrale Steuersystem gibt keinen Sollwert für die einzelnen Windenergieanlagen vor, sondern ermittelt lediglich einen additiven Korrekturwert, der nur zusammen mit einem lokalen Sollwert in der Windenergieanlage verarbeitet wird. Der erfindungsgemäße Windpark besitzt ferner eine Anlagensteuerung für mindestens eine Windenergieanlage. Die Anlagensteuerung ermittelt abhängig von dem Istwert der Windenergieanlage in dem Parknetz über einen zweiten Regler einen lokalen Sollwert für die elektrische Größe. Wie auch bei einzelnen Windenergieanlagen oder bei herkömmlichen Windenergieanlagen im Windpark ermittelt die Anlagensteuerung lokal aufgrund eines Istwertes an der Windenergieanlage einen lokalen Sollwert für die Windenergieanlage. Erfindungsgemäß bestimmt die Anlagensteuerung aus der Summe von lokalem Sollwert und Korrekturwert einen Gesamtsollwert, der die zu erzeugende elektrische Größe der Windenergieanlage bestimmt.

Erfindungsgemäß besitzt das zentrale Steuersystem eine erste Messeinheit, die einen Spannungs-, Leistungsfaktor-, Blindleistungs- oder einen Stromistwert vor oder nach dem Verbindungspunkt misst. Die erste Messeinheit des zentralen Steuersystems misst den Spannungs-, Leistungsfaktor-, Blindleistungs- oder den Stromistwert auf Niveau des Windparks, also an einer Leitung, in die sämtliche Beiträge der Windenergieanlagen eingespeist werden. Die erste Messeinheit ist mit einem ersten Regler über ein erstes Datenübertragungsmedium verbunden. Das Datenübertragungsmedium besitzt zweckmäßigerweise ein definiertes Protokoll, das für die Übertragung von Messdaten von der Messeinheit an den ersten Regler ausgelegt ist. Bevorzugt ist das Datenübertragungsmedium als ein schnelles Datenübertragungsmedium ausgebildet, dessen Übertragungszeit kurz im Vergleich zur Reaktionszeit des Regelkreises ist.

Erfindungsgemäß weist die Anlagensteuerung eine zweite Messeinheit auf, die einen Istwert der von der Windenergieanlage zu regelnden elektrischen Größe misst. Die zweite Messeinheit der Anlagensteuerung misst auf Niveau der Windenergieanlage die zu regelnde Größe. Allgemein muss die von der Windenergieanlage geregelte elektrische Größe nicht mit der von der Windenergieanlage eingespeisten elektrischen Größe zusammenfallen. So kann beispielsweise die Spannung U geregelt werden, während die Blindleistung Q die primär eingespeiste Größe darstellt.

Die zweite Messeinheit der Anlagensteuerung mit dem zweiten Regler über ein zweites Datenübertragungsmedium verbunden. Weil die Messeinheit der Anlagensteuerung an einem Messpunkt in der Nähe der Windenergieanlage misst, kann das zweite Datenübertragungsmedium als ein schnelles Datenübertragungsmedium ausgebildet sein, dessen Übertragungszeit kurz im Vergleich zur Reaktionszeit des Regelkreises ist.

Anders als bei den bekannten Verfahren zur Regelung eines Windparks sind hier erster und zweiter Regler parallel geschaltet, d. h. die Stellgrößen des ersten Reglers und des zweiten Reglers werden miteinander addiert, um einen Gesamtsollwert zu erhalten. Auch bei räumlich weit auseinander stehenden Windenergieanlagen, bei deren Regelung bereits die Übertragung und Verarbeitung von Steuersignalen zwischen den Windenergieanlagen ins Gewicht fallen kann, liefert die erfindungsgemäße Parallelschaltung eines ersten und eines zweiten Reglers eine ausreichende Reaktionszeit, ohne dass es erforderlich wäre, ein besonders schnelles Datenübertragungsmedium für die Signale innerhalb des Windparks zu wählen.

Erfindungsgemäß liegt an dem ersten Regler ein konstanter oder variabler Sollwert für eine von dem Windpark zu regelnde elektrische Größe an. Grundsätzlich ist davon auszugehen, dass der Windpark mit einem konstanten Sollwert für die zu regelnde elektrische Größe betrieben wird. Es können jedoch Fälle auftreten, in denen beispielsweise von einem Energieversorgungsunternehmen dem Windpark ein geänderter oder ein in der Zeit variabler Sollwert vorgegeben wird, der angibt, auf welchen Zielwert eine elektrische Größe geregelt werden soll.

In einer bevorzugten Ausgestaltung ist der erste Regler als Spannungs-, Leistungsfaktor-, Blindleistungs- oder Stromregler ausgebildet. Als Spannungsregler liegt an dem ersten Regler ein Spannungsistwert und ein Spannungssollwert an, als Leistungsfaktorregler liegt ein Istwert des Leistungsfaktors vor oder nach dem Verbindungspunkt und ein Leistungsfaktorsollwert an dem Leistungsfaktorregler an. Bei der Ausgestaltung als Blindleistungsregler liegen an diesem ein Blindleistungsistwert und ein Blindleistungssollwert an. Ebenso bei der Ausführung als Stromregler, an dem dann ein Istwert des Stroms und ein Stromsollwert anliegen.

In einer bevorzugten Weiterbildung des erfindungsgemäßen Windparks ermittelt der erste Regler als Stellgröße den Korrekturwert für einen lokalen Sollwert des Blindstroms, der Blindleistung, des Leistungsfaktors oder des Phasenwinkels. Allgemein betrifft der Korrekturwert einen lokalen Sollwert, der eine elektrische Blindgröße in dem elektrischen Versorgungsnetz betrifft.

In einer weiteren bevorzugten Ausgestaltung besitzt das zentrale Steuersystem ein Umrechnungsmodul, das die Stellgröße des ersten Reglers in Korrekturwerte für einzelne Windenergieanlagen umrechnet. Das zentrale Steuersystem mit seinem ersten Regler arbeitet auf Parkniveau, also mit Ist- und Sollwerten der elektrischen Größe des gesamten Windparks. Um die Korrekturwerte für einzelne Windenergieanlagen zu bestimmen, wird ein ermittelter Korrekturwert, der mithin auf Parkniveau die durchzuführende Korrektur angibt, auf Korrekturwerte für einzelne Energieanlagen umgerechnet. Um dabei bevorzugt den Betriebszustand bzw. die Leistung der einzelnen Windenergieanlage erfassen zu können, liegen an dem Umrechnungsmodul die Istwerte und/oder die lokalen Sollwerte der Windenergieanlagen an. Dies vermeidet, dass das Umrechnungsmodul einen Korrekturwert für eine Windenergieanlage bestimmt, der beispielsweise durch die Windenergieanlage nicht erzielbar ist.

In einer zweckmäßigen Ausgestaltung ist jeweils eine Anlagensteuerung für eine Windenergieanlage vorgesehen, so dass die Windenergieanlagen einzeln und nicht durch eine gemeinsame Anlagensteuerung gesteuert werden. An den Anlagensteuerungen der einzelnen Windenergieanlagen liegen die Korrekturwerte von dem zentralen Steuersystem an.

An dem zweiten Regler der Anlagensteuerung liegt in einer bevorzugten Ausgestaltung ein konstanter Sollwert für eine von der Windenergieanlage zu regelnde elektrische Größe an. Der zweite Regler regelt also im stationären Fall den Istwert auf den konstanten Sollwert. Hierbei ist zu berücksichtigen, dass der Korrekturwert noch zu dem lokalen Sollwert hinzukommt, so dass lediglich für den Fall, dass der Korrekturwert den Wert Null besitzt, der von dem zweiten Regler eingeregelte Istwert dem konstanten Sollwert entspricht.

Zweckmäßigerweise ist auch der zweite Regler als Spannungs-, Leistungsfaktor-, Blindleistungs- oder Stromregler ausgebildet, wobei der zweite Regler entsprechend dem ersten Regler ausgebildet ist. Dies heißt, wenn der erste Regler als Spannungsregler ausgebildet ist, dann ist auch der zweite Regler bevorzugt als Spannungsregler ausgebildet, während wenn der erste Regler als Stromregler oder als ein anderer Regler ausgebildet ist, auch der zweite Regler als Stromregler bzw. als entsprechend anderer Regler ausgebildet ist. Grundsätzlich ist es zwar nicht notwendig, dass erster und zweiter Regler gleich ausgebildet sind, jedoch ist es zweckmäßig, um die Umrechnung von Größen zu vermeiden.

Bevorzugt erzeugt der zweite Regler als Stellgröße den lokalen Sollwert des Blindstroms, der Blindleistung, des Leistungsfaktors oder des Phasenwinkels. Wie bereits bei dem ersten Regler, ermittelt auch der zweite Regler eine elektrische Größe, die einen Blindanteil der von der Windenergieanlage eingespeisten Leistung betrifft. Auch hier gilt, dass wenn der erste Regler als Größe den Korrekturwert für den Blindstrom bestimmt, dass der zweite Regler dann zweckmäßigerweise als Stellgröße ebenfalls den lokalen Sollwert für den Blindstrom bestimmt. Das gilt für die Blindleistung, den Leistungsfaktor und den Phasenwinkel entsprechend.

Als zweckmäßig hat sich herausgestellt, einen Glättungsfilter vorzusehen, der den Korrekturwert für den lokalen Sollwert vor der Addition mit dem lokalen Sollwert filtert. Der Glättungsfilter kann beispielsweise einen hochfrequenten Anteil aus dem Korrekturwert für den lokalen Sollwert herausfiltern und so die Stabilität des Reglers erhöhen.

In einer zweckmäßigen Ausgestaltung weist die Anlagensteuerung einen dritten Regler auf, an dem der gesamte Sollwert für die zu erzeugende elektrische Größe anliegt. Der dritte Regler erzeugt ein Steuersignal für ein Leistungsteil der Windenergieanlage. Die Ansteuerung des Leistungsteils der Windenergieanlage, das beispielsweise die Umrichter und den Generator sowie deren Ansteuerung umfasst, wird üblicherweise über einen Stromregler ausgeführt.

Erfindungsgemäß wird die Aufgabe auch durch ein Verfahren zur Regelung einer von einem Windpark mit mehren Windenergieanlagen in ein elektrisches Versorgungsnetz eingespeisten elektrischen Größe gelöst. Bei dem Verfahren liegt ein Korrekturwert für einen lokalen Sollwert einer oder mehrerer Windenergieanlagen abhängig von einem Istwert einer elektrischen Größe über einen ersten Regler an der mindestens einen Windenergieanlage an. An dem ersten Regler liegt der gemessene Istwert einer elektrischen Größe an und der Regler gibt als Stellgröße einen Korrekturwert für den lokalen Sollwert aus. Bei dem erfindungsgemäßen Verfahren wird für eine Anlagensteuerung mindestens einer Windenergieanlage abhängig von einem Istwert einer von der Windenergieanlage zu regelnden elektrischen Größe über einen zweiten Regler ein lokaler Sollwert für eine von der Windenergieanlage erzeugte elektrische Größe ermittelt. An dem zweiten Regler der Anlagensteuerung liegt der Istwert einer von der Windenergieanlage zu regelnden elektrischen Größe an und dient dazu, einen lokalen Sollwert für die erzeugte elektrische Größe als Stellgröße des zweiten Reglers zu ermitteln. Der Gesamtsollwert für die von der Windenergieanlage erzeugte elektrische Größe wird bei dem erfindungsgemäßen Verfahren als Summe aus lokalem Sollwert und Korrekturwert bestimmt. Dies bedeutet, dass wenn der Korrekturwert für den lokalen Sollwert einen von Null verschiedenen Wert besitzt, an der Windenergieanlage als Sollwertvorgabe nicht der lokale Sollwert anliegt, sondern der Gesamtsollwert, der dann von dem lokalen Sollwert verschieden ist. Das erfindungsgemäße Verfahren besitzt zwei parallele Regler, deren Stellgrößen jeweils zusammen den Sollwert für die Windenergieanlage bilden.

In einer bevorzugten Ausgestaltung des erfindungsgemäßen Verfahrens wird an dem ersten Regler die Regeldifferenz aus einem konstanten oder variablen Sollwert und einem Istwert der elektrischen Größe in dem elektrischen Versorgungsnetz gebildet. Der Istwert der elektrischen Größe in dem Versorgungsnetz kann dabei vor oder hinter einem Verbindungspunkt erfasst werden, über den der Windpark an das elektrische Versorgungsnetz angeschlossen ist.

In einer weiteren bevorzugten Ausgestaltung ermittelt der erste Regler als Stellgröße einen Korrekturwert für einen lokalen Sollwert des Blindstroms, der Blindleistung, des Leistungsfaktors oder des Phasenwinkels. Diese Korrekturwerte betreffen den Blindanteil einer in das elektrische Versorgungsnetz eingespeisten Leistung. Bevorzugt rechnet das zentrale Steuersystem die Stellgröße des ersten Reglers in Korrekturwerte für einzelne Windenergieanlagen um. Da der erste Regler ausgehend von Eingangsgrößen, die auf Ebene des Windparks gemessen oder vorgegeben sind, den Korrekturwert als Stellgröße ermittelt, wird diese Stellgröße bevorzugt abhängig von dem Istwert und/oder dem lokalen Sollwert der Windenergieanlage umgerechnet.

An dem zweiten Regler liegt ein konstanter Sollwert für die zu regelnde elektrische Größe in der Windenergieanlage an. Der zweite Regler ermittelt als Stellgröße den lokalen Sollwert des Blindstroms, der Blindleistung, des Leistungsfaktors oder des Phasenwinkels, wobei der zweite Regler bevorzugt eine Stellgröße derart erzeugt, wie der erste Regler.

Bei dem erfindungsgemäßen Verfahren wird der Korrekturwert vor einer Addition mit dem lokalen Sollwert geglättet.

Ausführungsbeispiele zu der Erfindung werden nachfolgend anhand der Figuren erläutert. Es zeigt:
- Figur 1: eine schematische Ansicht der erfindungsgemäßen Reglerstruktur mit zwei Anlagensteuerungen,
- Figur 2: eine schematische Ansicht der erfindungsgemäßen Reglerstruktur mit zwei Anlagensteuerungen, deren lokale Sollwerte an der zentralen Anlagensteuerung anliegen,
- Figur 3: ein Ablaufdiagramm des zentralen Steuersystems,
- Figur 4: ein Ablaufdiagramm für die Anlagensteuerung.

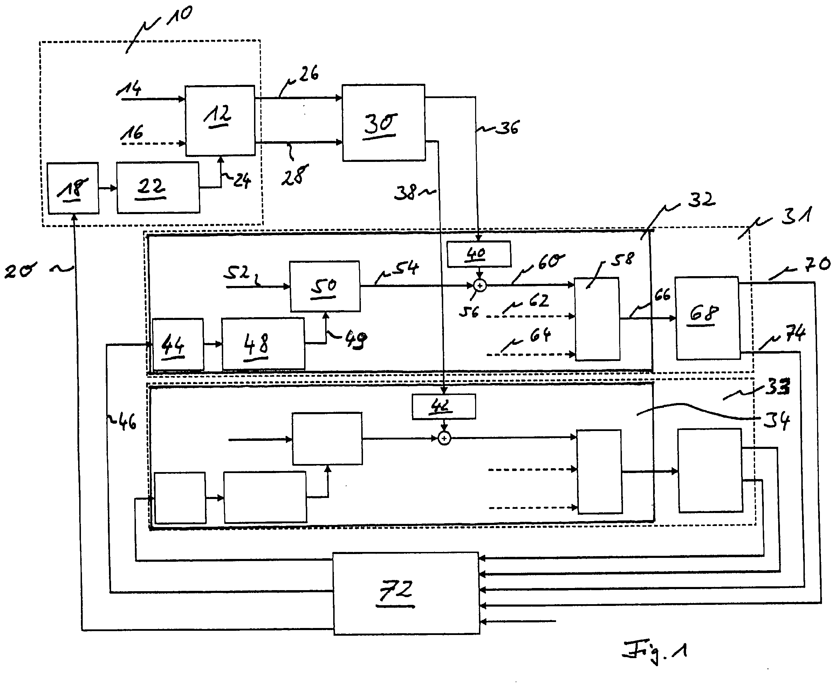

Figur 1 zeigt das zentrale Steuersystem 10 mit dem ersten Regler 12, der als Spannungsregler ausgebildet ist. An dem Spannungsregler 12 liegt ein konstanter oder variabler Spannungssollwert 14. Auch können weitere Messsignale 16, die der zentralen Steuerung 10 entweder von dem Windpark oder dem Energieversorgungsunternehmen zur Verfügung gestellt werden, an dem ersten Regler 12 anliegen. Das zentrale Steuersystem 10 weist ferner ein Messsystem 18 auf, das mit einem zentralen Messpunkt verbunden ist und einen Spannungsistwert 20 erfasst, der die elektrische Spannung des Windparks im Verbindungspunkt angibt. Der Spannungsistwert des Windparks wird von dem Messsystem 18 über ein schnelles Datenübertragungsmedium 22 an den ersten Regler 12 angelegt. Im ersten Regler 12 liegt der weitergeleitete, gemessene Spannungsistwert 24 des Windparks gemeinsam mit dem Spannungssollwert 14 an. Der erste Regler 12 bestimmt aus den anliegenden Größen einen zusätzlichen Blindstromsollwert 26 für eine erste Windenergieanlage und einen zusätzlichen Blindstromsollwert 28 für eine zweite Windenergieanlage. Bei den zusätzlichen Blindstromsollwerten 26 und 28 handelt es sich um Korrekturwerte für den lokalen Blindstromsollwert der Windenergieanlage.

Die zusätzlichen Blindstromsollwerte 26 und 28 werden über ein langsames Datenübertragungsmedium 30 an die Anlagensteuerung 32 der ersten Windenergieanlage 31 und die Anlagensteuerung 34 der zweiten Windenergieanlage 33 weitergeleitet. Die weitergeleiteten zusätzlichen Blindstromsollwerte 36 und 38 liegen jeweils an einem Glättungsfilter 40 und 42 der Anlagensteuerungen 32 bzw. 34 an.

Der zu regelnde Windpark kann aus deutlich mehr als zwei Windenergieanlagen bestehen. Zur besseren Übersicht wird nachfolgend die Anlagensteuerung 32 der ersten Windenergieanlage 31 beschrieben, wobei der Aufbau der Anlagensteuerung 34 der zweiten Windenergieanlage 33 und der Anlagensteuerungen der weiteren Windenergieanlagen identisch ist.

Die Anlagensteuerung 32 besitzt ein Messsystem 44, das einen Spannungsistwert 46 in der Nähe der Windenergieanlage erfasst. Der erfasste Spannungsistwert der Windenergieanlage wird über ein schnelles Datenübertragungsmedium 48 an einen zweiten Regler 50 als gemessener Istwert 49 weitergeleitet. An dem zweiten Regler 50 liegt zusätzlich ein konstanter Spannungssollwert 52 an. Der konstante Spannungssollwert 52 gibt die zu erzeugende Spannung der Windenergieanlage an. Der zweite Regler 50 ist als dezentraler Spannungsregler ausgebildet und erzeugt einen lokalen Sollwert 54 für den einzustellenden Blindstrom.

In dem dargestellten Ausführungsbeispiel sind der erste Regler 12 und der zweite Regler 50 als Spannungsregler ausgebildet, an denen jeweils die Spannung am Einspeisepunkt des Windparks bzw. die Spannung an einem Messpunkt nahe der Windenergieanlage als Istwert anliegt. Der erste Regler 12 und der zweite Regler 50 geben als Stellgröße jeweils einen Beitrag für den von der Windenergieanlage zu erzeugenden Blindstrom aus. Im Fall der ersten Windenergieanlage ist dies der zusätzliche Blindstromsollwert 26 bzw. der weitergeleitete zusätzliche Blindstromsollwert 36 und die Stellgröße 54 des zweiten Reglers.

Im Summationsglied 56 wird der lokale Blindstromsollwert 54 mit dem geglätteten zusätzlichen Blindstromsollwert addiert. An einem dritten Regler 58 liegt dann der gesamte Blindstromsollwert 60 an. Der dritte Regler 58 ist als Stromregler ausgebildet, der den gesamten Blindstromsollwert 60 verarbeitet. Optional können an dem Regler noch ein Wirkstromsollwert 62 und weitere Messsignale 64 anliegen. Der dritte Regler 58 erzeugt als Stellgröße ein Steuersignal 66, das an einem Leistungsteil 68 der Windenergieanlage anliegt. Das Steuersignal 66 gibt dem Leistungsteil 68 vor, wie Generator und Umrichter zu steuern sind, um einen Blindstrom 70 einzustellen, der dem gesamten Blindstromsollwert 60 entspricht. Der von der Windenergieanlage in das Parknetz eingespeiste Blindstrom wirkt über die Regelstrecke 72 auf die Spannungsistwerte 20 und 46, so dass der Regelkreis geschlossen ist. Zusätzlich erzeugt die Windenergieanlage selbstverständlich neben dem Blindstrom 70 auch einen Wirkstrom 74, der ebenfalls über die Regelstrecke 72 auf die Spannungsistwerte 20 und 46 wirkt.

Die in Figur 1 dargestellte Regelstruktur besteht aus zwei parallel zueinander arbeitenden Regelkreisen. Der erste Regelkreis wird gebildet über die Regelstrecke 72, den Spannungsistwert des Windparks 20, das Steuersystem 10 mit seinem zentralen Spannungsregler 12, das langsame Datenübertragungsmedium 30, über das die Korrekturwerte für die lokalen Blindstromsollwerte 36 und 38 übertragen werden, den Stromregler 58 und das Leistungsteil 68, über das ein Blindstrom 70 und ein Wirkstrom 74 in die Regelstrecke 72 eingespeist werden. Der parallel dazu arbeitende Regelkreis besteht aus der Regelstrecke 72 und dem dezentral an der Windenergieanlage gemessenen Spannungsistwert 46, der über den zweiten dezentralen Spannungsregler in einen lokalen Blindstromsollwert 54 umgewandelt wird. Mit dem Summationsglied 56 werden der Korrekturwert 36 bzw. dessen geglätteter Wert und der lokale Blindstromsollwert 54 miteinander addiert und von da ab gemeinsam über den Stromregler 58 übertragen. Zum Verständnis der Reglerstruktur ist wichtig, dass die Übertragung der Korrekturwerte 26, 28 zum Summationsglied 56 über das langsame Datenübertragungsmedium für eine deutlich langsamere Reglercharakteristik der über das zentrale Steuersystem erfolgenden Regelung ausreicht. Die Regelung auf dem Niveau der Windenergieanlage erfolgt jeweils über ein schnelles Datenübertragungsmedium 48, so dass hier ein deutlich dynamischerer Regler 50 eingesetzt werden kann.

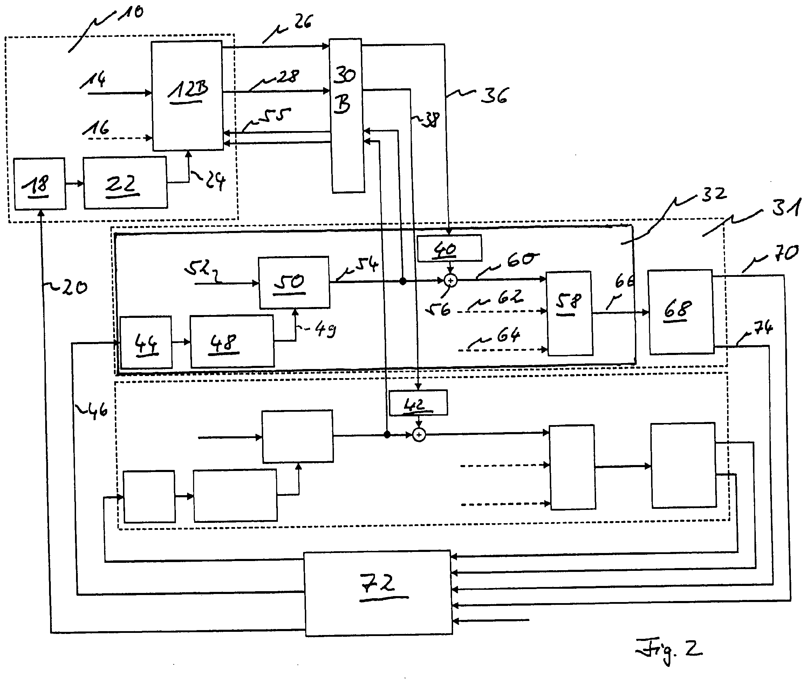

Figur 2 zeigt ein weiteres Ausführungsbeispiel, in dem eine Rückführung der von dem zweiten Regler ermittelten lokalen Blindstromsollwerte über das langsame Datenübertragungsmedium an den ersten Regler erfolgt. Zur besseren Übersicht sind gleiche Elemente in Figur 2 mit gleichen Bezugszeichen wie in Figur 1 belegt. Sofern in der geänderten Reglerstruktur einzelne Elemente verschieden sind, wird dies durch den Zusatz B kenntlich gemacht.

Die Reglerstruktur des weiteren Ausführungsbeispiels aus Figur 2 beinhaltet eine Rückkopplung, mit der der lokale Blindstromsollwert 54 über das langsame Datenübertragungsmedium 30B an den ersten Regler 12B zurückgeleitet wird. Der zurückgeleitete lokale Blindstromsollwert ist als 55 in Figur 2 dargestellt. Der erste Regler kann beispielsweise mit Hilfe eines bekannten Regelungsverfahrens einen gewünschten System-Blindstromsollwert für den gesamten Windpark berechnen, von diesem dann die Summe der lokalen Blindstromsollwerte 55 abziehen und nur die verbleibende Differenz auf die Korrekturwerte 26, 28 aufteilen. Dadurch wird erreicht, dass die Summe der Gesamt-Blindstromsollwerte 60 aller Anlagen im Mittel dem gewünschten System-Blindstromsollwert entspricht. Alternativ kann der erste Regler 12B aufgrund des zurückgeleiteten lokalen Blindstromsollwerts 55 entscheiden, wie die Korrekturwerte für Blindstromsollwerte auf die einzelnen Windenergieanlagen aufgeteilt werden sollen. So kann der erste Regler beispielsweise bei der ersten Windenergieanlage 31, wenn diese einen großen Blindstromsollwert 54 besitzt, diesen nur geringfügig über den Wert 26 korrigieren und stattdessen, die notwendige Korrektur in den Korrekturwert 28 für die zweite Windenergieanlage einfließen lassen.

In dem vorstehenden Ausführungsbeispiel wurde eine Reglerstruktur beschrieben, bei der der Blindstromsollwert über Spannungsregler 50, 12 bzw. 12B ermittelt worden ist. Alternativ ist es auch möglich, in der Reglerstruktur auf den Leistungsfaktor, die Blindleistung oder den Phasenwinkel abzustellen, allgemein reicht es, eine beliebige elektrische Größe zu betrachten, die die Blindleistung im Netz beeinflussen kann.

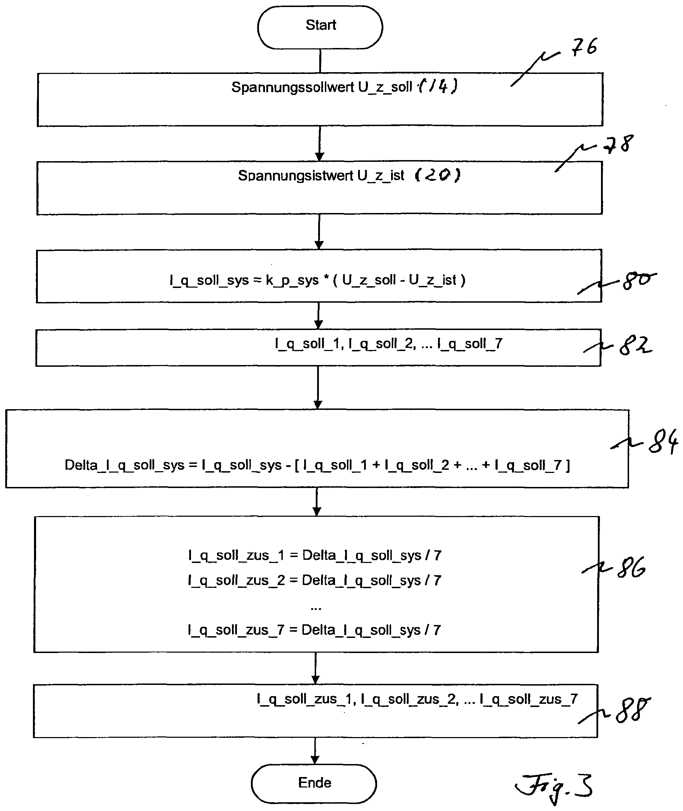

Figur 3 zeigt in einem Ablaufdiagramm die Bestimmung der Korrekturwerte für den Blindstromsollwert in dem zentralen Steuersystem 10. Figur 3 zeigt in einem ersten Schritt 76, dass ein zentraler Spannungssollwert 14 eingelesen wird. Der zentrale Spannungssollwert 14 kann dabei begrenzt und/oder gefiltert werden.

In Schritt 78 wird der zentrale Spannungsistwert 24 von dem Messsystem 18 eingelesen. Auch der zentrale Spannungsistwert 24 kann hier im Vorfeld begrenzt und/oder gefiltert werden.

In Schritt 80 wird der Korrekturwert für den lokalen Sollwert des Blindstroms nach einem Proportional-Regelgesetz gebildet, wobei die Differenz aus zentralem Spannungssollwert und zentralem Spannungsistwert mit einer Gesamtsystemproportionalverstärkung (k_p_sys) multipliziert wird. Das Ergebnis wird als gewünschter Systemblindstromsollwert (I_q_soll_sys) zwischengespeichert.

In Schritt 82 werden die lokal ermittelten Blindstromsollwerte (I_q_soll_1 bis I_q_soll_7) der einzelnen Windenergieanlagen eingelesen.

In Schritt 84 wird als Korrekturwert die Differenz zwischen gewünschtem Systemblindstromsollwert und Summe der dezentralen Blindstromsollwerte berechnet. (Delta_I_q_soll_sys). Die so gebildete Differenz gibt an, um welchen Betrag insgesamt die von den Anlagen ermittelten lokalen Sollwerte korrigiert werden müssen, um auf den gewünschten Systemblindstromsollwert zu kommen.

In Schritt 86 wird die Differenz durch die Anzahl der Windenergieanlagen geteilt, um die zusätzlichen Blindstromsollwerte (I_q_soll_zus_1 bis I_q_soll_zus_7) zu bestimmen. In dem dargestellten Beispiel wird ein Windpark mit sieben Anlagen angenommen, so dass für jede Anlage 1/7 der Differenz als Korrekturwert weitergeleitet wird.

In Schritt 88 werden die zusätzlichen Blindstromsollwerte als Korrekturwerte ausgegeben und an die einzelnen Windenergieanlagen angelegt.

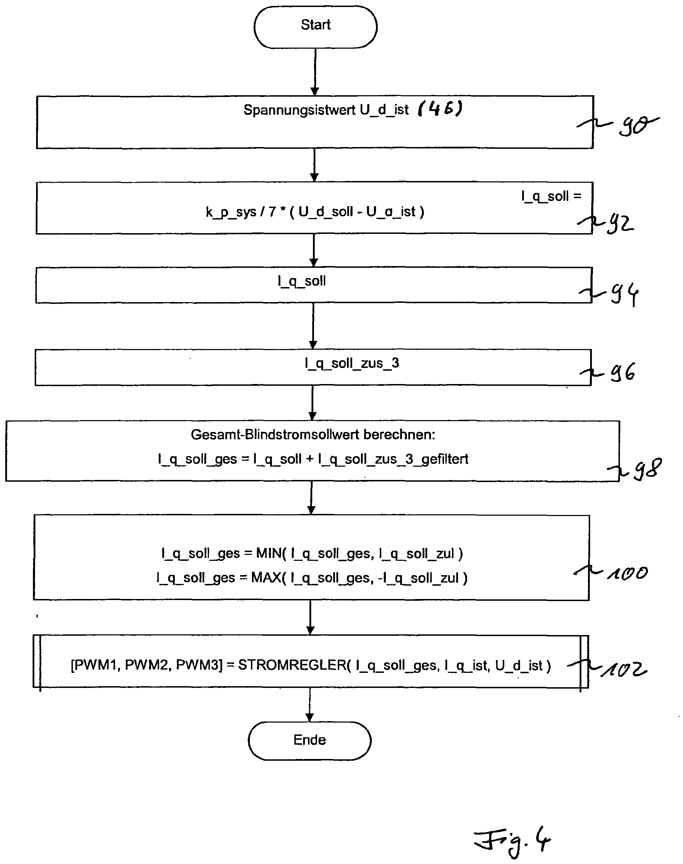

Figur 4 zeigt ein Ablaufdiagramm für die Anlagensteuerung. In Schritt 90 wird ein dezentraler Spannungsistwert 46 eingelesen. Der Spannungsistwert ist dezentral, da er an der Windenergieanlage nahe ihrem Einspeisepunkt gemessen wird.

In Schritt 90 wird unter Rückgriff auf den Proportionalitätsfaktor (k_p_sys) aus Schritt 80 ein lokaler Sollwert für den Blindstrom nach dem Proportional-Regelgesetz berechnet. In Schritt 94 wird der lokale Blindstromsollwert (I_q_soll) in das zentrale Steuersystem zurückgeleitet. Dies entspricht Schritt 82 aus Figur 3.

Nachfolgend wird in Schritt 96 der Korrekturwert für den Blindstromsollwert (I_q_soll_3) eingelesen und gefiltert. Dieser Wert wird in Schritt 88 aus Figur 3 von der Systemsteuerung ausgegeben.

In Schritt 98 ermittelt die Anlagensteuerung den Gesamtblindstromsollwert (I_q_soll_ges) als die Summe aus dem lokal bestimmten Blindstromsollwert (I_q_soll) und dem gefilterten zusätzlichen Sollwert (I_q_soll_3_gefiltert) für den Blindstrom.

In einem nachfolgenden Schritt 100 wird der gesamte Blindstromsollwert (I_q_soll_ges) auf einen zulässigen Bereich (-I_q_soll_zul bis I_q_soll_zul) begrenzt, dessen Werte für die Windenergieanlage vorgeben sind. Über eine Minimums- und eine Maximumsbildung des Gesamtsollwerts für den Blindstrom mit dem positiven maximal zulässigen Blindstromsollwert bzw. dem negativen maximal zulässigen Blindstromsollwert, wird der Gesamtsollwert des Blindstroms begrenzt.

Mit dem abschließenden Verfahrensschritt 102 werden die Anlagensteuersignale als Pulsweiten modulierte Signale zur Ansteuerung des Leistungsteils generiert.

Insgesamt ist es möglich, die vorstehend beschriebenen Reglerabläufe zu variieren. So ist es beispielsweise möglich bei dem zentralen Steuersystem in Schritt 80 statt auf ein Proportional-Regelgesetz abzustellen, ein Integral-Regelgesetz anzuwenden. Auch ist es möglich, auf Schritt 82 und 84 zu verzichten, in dem die lokalen Sollwerte für den Blindstrom verarbeitet werden. Stattdessen kann der beispielsweise mit dem Integral-Regelgesetz gebildete Integralanteil des Blindstromsollwertes durch die Anlagenzahl geteilt und der Quotient als Korrekturwert weitergeleitet werden.

## Patentansprüche

1. Windpark mit mehreren Windenergieanlagen, die mit einem elektrischen Parknetz verbindbar sind, das über einen Verbindungspunkt mit einem elektrischen Versorgungsnetz verbindbar ist, wobei der Windpark Folgendes aufweist:
- ein zentrales Steuersystem (10), das eine erste Messeinheit (18) aufweist, die einen Spannungs-, Leistungsfaktor-, Blindleistungs- oder einen Strom-Istwert (20) vor oder nach dem Verbindungspunkt des Windparks misst, und das einen mit der Messeinheit (18) verbundenen ersten Regler (12, 12 B) aufweist, über den das zentrale Steuersystem (10) abhängig von dem gemessenen Istwert (24) einen Korrekturwert (26, 28) für einen lokalen Sollwert (54) einer oder mehrerer Windenergieanlagen ermittelt, und
- eine Anlagensteuerung (32) für mindestens eine Windenergieanlage, die eine zweite Messeinheit (44) aufweist, die einen Spannungs-, Leistungsfaktor-, Blindleistungs- oder Strom-Istwert (46) an oder in der Nähe der Windenergieanlage misst, und die einen mit der zweiten Messeinheit (44) verbundenen Regler aufweist, über den die Anlagensteuerung (32) abhängig von dem gemessenen Istwert (49) einen lokalen Sollwert (54) für eine von der Windenergieanlage zu erzeugende elektrische Größe ermittelt,
- **dadurch gekennzeichnet dass** die Anlagensteuerung die Summe aus lokalem Sollwert (54) und Korrekturwert (36) als Gesamtsollwert (60) für die zu erzeugende elektrische Größe der Windenergieanlage bestimmt,
- an dem ersten Regler (12, 12B) ein konstanter oder variabler Sollwert (14) für eine von dem Windpark zu regelnde elektrische Größe anliegt, und
- die erste Messeinheit (18) mit dem ersten Regler (12, 12B) über ein erstes Datenübertragungsmedium (30) und die zweite Messeinheit (44) mit dem zweiten Regler (58) über ein zweites Datenübertragungsmedium (48) verbunden ist und das erste Datenübertragungsmedium (30) als ein langsames Medium und das zweite Datenübertragungsmedium (48) als ein schnelles Medium ausgebildet ist.

2. Windpark nach Anspruch 1, **dadurch gekennzeichnet, dass** der erste Regler (12, 12B) und/oder der zweite Regler (50) als Spannungs-, Leistungsfaktor-, Blindleistungs- oder Stromregler ausgebildet ist.

3. Windpark nach einem der Ansprüche 1 oder 2, **dadurch gekennzeichnet, dass** der erste Regler (12) als Stellgröße den Korrekturwert (26, 28) für den lokalen Sollwert (54) des Blindstroms, der Blindleistung, des Leistungsfaktors oder des Phasenwinkels ermittelt.

4. Windpark nach einem der Ansprüche 1 bis 3, **dadurch gekennzeichnet, dass** das zentrale Steuersystem (10) ein Umrechnungsmodul aufweist, das die Stellgröße des ersten Reglers in Korrekturwerte (36, 38) für einzelne Windenergieanlagen umrechnet.

5. Windpark nach Anspruch 4, **dadurch gekennzeichnet, dass** an dem Umrechnungsmodul die Istwerte und/oder die lokalen Sollwerte für die zu erzeugende elektrische Größe der Windenergieanlagen anliegen.

6. Windpark nach einem der Ansprüche 1 bis 5, **dadurch gekennzeichnet, dass** jeweils eine Anlagensteuerung (32) für eine Windenergieanlage vorgesehen ist und der Korrekturwert (36, 38) von dem zentralen Steuersystem (10) an der Anlagensteuerung anliegt.

7. Windpark nach einem der Ansprüche 1 bis 6, **dadurch gekennzeichnet, dass** an dem zweiten Regler (50) ein konstanter Sollwert (52) für eine von der Windenergieanlage in dem Parknetz gemessene elektrische Größe anliegt.

8. Windpark nach einem der Ansprüche 1 bis 7, **dadurch gekennzeichnet, dass** der zweite Regler (50) als Stellgröße den lokalen Sollwert des Blindstroms, der Blindleistung, des Leistungsfaktors oder des Phasenwinkels ermittelt.

9. Windpark nach einem der Ansprüche 1 bis 8, **dadurch gekennzeichnet, dass** die Anlagensteuerung (32) einen dritten Regler (58) aufweist, an dem der Gesamtsollwert (60) für die zu erzeugende elektrische Größe anliegt und der ein oder mehrere Steuersignale (66) für ein Leistungsteil (68) der Windenergieanlage abgibt.

10. Verfahren zur Regelung einer von einem Windpark mit mindestens einer Windenergieanlage in ein elektrisches Versorgungsnetz eingespeisten elektrischen Größe, bei dem
- ein zentrales Steuersystem (10) abhängig von einem Istwert (24) einer elektrischen Größe über einen ersten Regler (12) einen Korrekturwert (26, 28) für einen lokalen Sollwert (54) einer oder mehrerer Windenergieanlagen (31, 33) ermittelt, und
- eine Anlagensteuerung (32) für mindestens eine Windenergieanlage abhängig von einem Istwert einer von der Windenergieanlage gemessenen elektrischen Größe über einen zweiten Regler (50) den lokalen Sollwert (54) für die zu erzeugende elektrische Größe ermittelt,
- **dadurch gekennzeichnet dass** der Gesamtsollwert (60) für die von der Windenergieanlage zu erzeugende elektrische Größe als Summe aus lokalem Sollwert (54) und Korrekturwert (36) bestimmt wird und
- an dem ersten Regler (12) eine Regeldifferenz aus einem konstanten oder variablen Sollwert (14) und einem gemessenen Istwert (24) der elektrischen Größe in dem elektrischen Versorgungsnetz gebildet wird,
- wobei die erste Messeinheit (18) mit dem ersten Regler (12, 12B) über ein erstes Datenübertragungsmedium (30) und die zweite Messeinheit (44) mit dem zweiten Regler (58) über ein zweites Datenübertragungsmedium (48) verbunden ist und das erste Datenübertragungsmedium (30) als ein langsames Medium und das zweite Datenübertragungsmedium (48) als ein schnelles Medium ausgebildet ist.

11. Verfahren nach Anspruch 10, **dadurch gekennzeichnet, dass** der erste Regler (12) als Stellgröße einen Korrekturwert (26; 28) für einen lokalen Sollwert des Blindstroms, der Blindleistung, des Leistungsfaktors oder des Phasenwinkels ermittelt.

12. Verfahren nach Anspruch 10 oder 11, **dadurch gekennzeichnet, dass** das zentrale Steuersystem (10) die Stellgröße des ersten Reglers (12) in Korrekturwerte (26, 28) für einzelne Windenergieanlagen umrechnet.

13. Verfahren nach Anspruch 12, **dadurch gekennzeichnet, dass** das zentrale Steuersystem (10) die Korrekturgröße für die Windenergieanlagen abhängig von dem Istwert und/oder dem lokalen Sollwert (55) der elektrischen Größe der Windenergieanlagen ermittelt.

14. Verfahren nach einem der Ansprüche 10 bis 13, **dadurch gekennzeichnet, dass** an dem zweiten Regler (50) ein konstanter Sollwert (52) für die zu regelnde elektrische Größe der Windenergieanlage anliegt.

15. Verfahren nach einem der Ansprüche 10 bis 14, **dadurch gekennzeichnet, dass** der zweite Regler (50) als Stellgröße (54) den lokalen Sollwert des Blindstroms, der Blindleistung, des Leistungsfaktors oder des Phasenwinkels ermittelt.

## Claims

1. A wind farm with a plurality of wind turbines that are connectable to an electric farm network that is connectable via a connection node to an electrical supply network, wherein the wind farm has the following:
- a central control system (10) that has a first measuring unit (18) that measures a voltage, power factor, reactive power or a current actual value (20) before or after the connecting node of the wind farm, and that has a first controller (12, 12B) connected to the measuring unit (18) by means of which, depending on the measured actual value (24), the central control system (10) determines a corrective value (26, 28) for a local setpoint (54) of one or more wind turbines, and
- a turbine control (32) for at least one wind turbine that has a second measuring unit (44) which measures a voltage, power factor, reactive power or current actual value (46) at or in the proximity of the the wind turbine, and that has a controller connected to the second measuring unit (44) by means of which, depending on the measured actual value (49), the turbine control (32) determines a local setpoint (54) for an electrical quantity to be generated by the wind turbine,
- **characterized in that**
the turbine control determines the sum of the local setpoint (54) and corrective value (36) as an overall setpoint (60) for the electrical variable of the wind turbine to be generated,
- a constant or variable setpoint (14) for an electrical variable to be controlled by the wind farm is applied to the first controller (12, 12B), and
- the first measuring unit (18) is connected to the first controller (12, 12B) via a first data transmission medium (30), and the second measuring unit (44) is connected to the second controller (58) via a second data transmission medium (48), and the first data transmission medium (30) is designed as a slow medium, and the second data transmission medium (48) is designed as a fast medium.

2. The wind farm according to claim 1, **characterized in that** the first controller (12, 12B) and/or the second controller (50) is designed as a voltage, power factor, reactive power or current controller.

3. The wind farm according to one of claims 1 or 2, **characterized in that** the first controller (12) determines the corrective value (26, 28) as a setpoint variable for the local setpoint (54) of the reactive current, the reactive power, the power factor or the phase angle.

4. The wind farm according to one of claims 1 to 3, **characterized in that** the central control system (10) has a conversion module that converts the setpoint variable of the first controller into corrective values (36, 38) for individual wind turbines.

5. The wind farm according to claim 4, **characterized in that** the actual values and/or the local setpoints for the electrical quantity of the wind turbines to be generated is applied to the conversion module.

6. The wind farm according to one of claims 1 to 5, **characterized in that** a turbine control (32) is provided for a wind turbine, and the corrective value (36, 38) from the central control system (10) is applied to the turbine control.

7. The wind farm according to one of claims 1 to 6, **characterized in that** a constant setpoint (52) for an electrical variable measured by the wind turbine in the farm network is applied to the second controller (50).

8. The wind farm according to one of claims 1 to 7, **characterized in that** the second controller (50) determines the local setpoint of the reactive current, reactive power, power factor or phase angle as a setpoint variable.

9. The wind farm according to one of claims 1 to 8, **characterized in that** the turbine control (32) has a third controller (58) to which is applied the overall setpoint (60) for the electrical variable to be generated, and that emits one or more control signals (66) for a power section (68) of the wind turbine.

10. A method for controlling an electrical variable from a wind farm with at least one wind turbine into an electrical variable fed into an electrical supply network, wherein
- a central control system (10) determines a corrective value (26, 28) for a local setpoint (54) of one or more wind turbines (31, 33) via a first controller (12) depending on an actual value (24) of an electrical variable, and
- for at least one wind turbine, a turbine control (32) determines the local setpoint (54) for the electrical variable to be generated via a second controller (50) depending on an actual value of an electrical variable measured by the wind turbine,
- **characterized in that**
the overall setpoint (60) for the electrical variable to be generated by the wind turbine is determined as the sum of the local setpoint (54) and corrective value (36), and
- in the first controller (12), a control difference from a constant or variable setpoint (14) and a measured actual value (24) of the electrical variable is formed in the electric supply network,
- wherein the first measuring unit (18) is connected to the first controller (12, 12B) via a first data transmission medium (30), and the second measuring unit (44) is connected to the second controller (58) via a second data transmission medium (48), and the first data transmission medium (30) is designed as a slow medium, and the second data transmission medium (48) is designed as a fast medium.

11. A method according to claim 10, **characterized in that** the first controller (12) determines a corrective value (26, 28) as a setpoint variable for a local setpoint of the reactive current, the reactive power, the power factor or the phase angle.

12. The method according to claim 10 or 11, **characterized in that** the central control system (10) converts the setpoint variable of the first controller (12) into corrective values (26, 28) for individual wind turbines.

13. The method according to claim 12, **characterized in that** the central control system (10) determines the corrective value for the wind turbines depending on the actual value and/or the local setpoint (55) of the electrical variable of the wind turbines.

14. The method according to one of claims 10 to 13, **characterized in that** a constant setpoint (52) for the electrical variable of the wind turbine to be controlled is applied to the second controller (50).

15. The method according to one of claims 10 to 14, **characterized in that** the second controller (50) determines the local setpoint of the reactive current, reactive power, power factor or phase angle as a setpoint variable (54).

## Revendications

1. Parc éolien doté de plusieurs éoliennes, qui peuvent être reliées par un réseau de parc électrique, lequel est raccordable à un réseau d'alimentation électrique par un point de connexion, sachant que le parc éolien présente les éléments suivants :
• un système de commande centrale (10), qui présente une première unité de mesure (18) évaluant une valeur effective (20) de tension, de facteur de puissance, de puissance réactive ou de courant en amont ou en aval du point de connexion, et qui présente un premier régulateur (12, 12 B) relié à l'unité de mesure (18), au moyen duquel le système de commande centrale (10) détermine une valeur de correction (26, 28) applicable à une valeur de consigne locale (54) d'une ou de plusieurs éoliennes en fonction de la valeur effective mesurée (24), et
• une commande d'installation (32) d'au moins une éolienne, qui présente une seconde unité de mesure (44) évaluant une valeur effective (46) de tension, de facteur de puissance, de puissance réactive ou de courant sur ou à proximité de l'éolienne, et qui présente un régulateur relié à la seconde unité de mesure (44), au moyen duquel la commande d'installation (32) détermine une valeur de consigne locale (54) d'une grandeur électrique à générer par l'éolienne en fonction de la valeur effective mesurée (49),
• **caractérisé en ce**
**que** la commande d'installation établit la somme de la valeur de consigne locale (54) et de la valeur de correction (36) comme étant la valeur de consigne totale (60) de la grandeur électrique à générer de l'éolienne,
• **qu'**une valeur de consigne (14) constante ou variable d'une grandeur électrique à régler par le parc éolien est appliquée au premier régulateur (12, 12 B) et
• **que** la première unité de mesure (18) est reliée au premier régulateur (12, 12 B) par un premier moyen de transmission de données (30) et la seconde unité de mesure (44) au deuxième régulateur (58) par un second moyen de transmission de données (48) et le premier moyen de transmission de données (30) est conçu comme un moyen lent et le second moyen de transmission de données (48) comme un moyen rapide.

2. Parc éolien selon la revendication 1, **caractérisé en ce que** le premier régulateur (12, 12 B) et/ou le deuxième régulateur (50) est conçu comme un régulateur de tension, de facteur de puissance, de puissance réactive ou de courant.

3. Parc éolien selon l'une des revendications 1 ou 2, **caractérisé en ce que** le premier régulateur (12) détermine la valeur de correction (26, 28) applicable à la valeur de consigne locale (54) du courant réactif, de la puissance réactive, du facteur de puissance ou de l'angle de phase comme grandeur réglante.

4. Parc éolien selon l'une des revendications 1 à 3, **caractérisé en ce que** le système de commande centrale (10) présente un module de conversion, qui convertit la grandeur réglante du premier régulateur en valeurs de correction (36, 38) applicables aux différentes éoliennes.

5. Parc éolien selon la revendication 4, **caractérisé en ce que** les valeurs effectives et/ou les valeurs de consigne locales de la grandeur électrique à générer des éoliennes sont présentes sur le module de conversion.

6. Parc éolien selon l'une des revendications 1 à 5, **caractérisé en ce qu'**une commande d'installation (32) est prévue à chaque fois pour une éolienne et que la valeur de correction (36, 38) provenant du système de commande centrale (10) est présente sur la commande d'installation.

7. Parc éolien selon l'une des revendications 1 à 6, **caractérisé en ce qu'**une valeur de consigne (52) constante applicable à une grandeur électrique mesurée par l'éolienne dans le parc éolien est présente sur le deuxième régulateur (50).

8. Parc éolien selon l'une des revendications 1 à 7, **caractérisé en ce que** le deuxième régulateur (50) détermine la valeur de consigne locale du courant réactif, de la puissance réactive, du facteur de puissance ou de l'angle de phase comme grandeur réglante.

9. Parc éolien selon l'une des revendications 1 à 8, **caractérisé en ce que** la commande d'installation (32) présente un troisième régulateur (58), sur lequel la valeur de consigne totale (60) de la grandeur électrique à générer est présente et qui émet un ou plusieurs signaux de commande (66) destinés à n étage de puissance (68) de l'éolienne.

10. Procédé de réglage d'une grandeur électrique injectée dans un réseau d'alimentation électrique par un parc éolien doté d'au moins une éolienne, dans lequel
- un système de commande centrale (10) détermine une valeur de correction (26, 28) applicable à une valeur de consigne locale (54) d'une ou de plusieurs éoliennes (31, 33) en fonction d'une valeur effective (24) d'une grandeur électrique au moyen d'un premier régulateur (12) et
- une commande d'installation (32) d'au moins une éolienne détermine la valeur de consigne locale (54) applicable à la grandeur électrique à générer en fonction d'une valeur effective d'une grandeur électrique mesurée par l'éolienne au moyen d'un deuxième régulateur (50),
- **caractérisé en ce que**
la valeur de consigne totale (60) applicable à la grandeur électrique à générer par l'éolienne est établie comme la somme de la valeur de consigne locale (54) et de la valeur de correction (36) et
- qu'une différence de réglage découlant d'une valeur de consigne (14) constante ou variable et d'une valeur effective mesurée (24) de la grandeur électrique dans le réseau d'alimentation électrique se forme au niveau du premier régulateur (12),
- dans lequel la première unité de mesure (18) est reliée au premier régulateur (12, 12 B) par un premier moyen de transmission de données (30) et la seconde unité de mesure (44) au deuxième régulateur (58) par un second moyen de transmission de données (48) et le premier moyen de transmission de données (30) est conçu comme un moyen lent et le second moyen de transmission de données (48) comme un moyen rapide.

11. Procédé selon la revendication 10, **caractérisé en ce que** le premier régulateur (12) détermine une valeur de correction (26 ; 28) applicable à une valeur de consigne locale du courant réactif, de la puissance réactive, du facteur de puissance ou de l'angle de phase comme grandeur réglante.

12. Procédé selon la revendication 10 ou 11, **caractérisé en ce que** le système de commande centrale (10) convertit la grandeur réglante du premier régulateur (12) en valeurs de correction (26, 28) applicables aux différentes éoliennes.

13. Procédé selon la revendication 12, **caractérisé en ce que** le système de commande centrale (10) détermine la grandeur de correction applicable aux éoliennes en fonction de la valeur effective et/ou de la valeur de consigne locale (55) de la grandeur électrique des éoliennes.

14. Procédé selon l'une des revendications 10 à 13, **caractérisé en ce qu'**une valeur de consigne constante (52) applicable à la grandeur électrique à régler de l'éolienne est présente sur le deuxième régulateur (50).

15. Procédé selon l'une des revendications 10 à 14, **caractérisé en ce que** le deuxième régulateur (50) détermine la valeur de consigne locale du courant réactif, de la puissance réactive, du facteur de puissance ou de l'angle de phase comme grandeur réglante.
